# EUROPÄISCHE PATENTSCHRIFT

(11) **EP 0 475 498 B1**
(45) Veröffentlichungstag und Bekanntmachung des Hinweises auf die Patenterteilung: **03.01.1996**
(21) Anmeldenummer: 91202177.1
(22) Anmeldetag: 28.08.1991
(51) Int. Cl.: H04J 3/07

(54) **Schaltungsanordnung zur Bitratenanpassung zweier digitaler Signale**
Circuit for bit-rate adaption of two digital signals
Circuit d'adaption du débit binaire de deux signaux numériques

(30) Priorität: 04.09.1990 DE 4027968
(43) Veröffentlichungstag der Anmeldung: 18.03.1992
(73) Patentinhaber: Philips Patentverwaltung GmbH, D-22335 Hamburg (DE); Philips Electronics N.V., NL-5621 BA Eindhoven (NL)
(72) Erfinder: Urbansky, Ralph, Dr.-Ing., W-8501 Schwaig 2 (DE)
(74) Vertreter: Volmer, Georg, Dipl.-Ing.

(56) Entgegenhaltungen:
- DE-A- 3 315 372
- US-A- 4 002 844

## Beschreibung

Die Erfindung bezieht sich auf eine Schaltungsanordnung zur Bitratenanpassung zweier digitaler Signale
- mit einem Pufferspeicher zum Einschreiben eines ersten Signals und zum Auslesen eines zweiten Signals,
- mit einem Subtrahierer zur Erzeugung eines Differenzsignals durch Bildung der Differenz der Zählerinhalte zwischen einem zur Steuerung des Lesevorgangs dienenden Lesezähler und einem zur Steuerung des Schreibvorgangs dienenden Schreibzähler und
- mit einer Stopfentscheidungsschaltung zur Erzeugung eines Anhaltesignals für den Lesezähler.

Eine derartige Schaltungsanordnung zur Bitratenanpassung zweier digitaler Signale wird in der Nachrichtenübertragungstechnik beispielsweise bei plesiochronen Multiplexern benötigt, die plesiochrone Signale bündeln. Zwei digitale Signale heißen plesiochron, wenn ihre Bitraten innerhalb einer gegebenen Toleranz vom Nennwert abweichen. Bevor plesiochrone Signale durch einen plesiochronen Multiplexer zusammengefaßt werden, müssen sie alle auf die gleiche Bitrate gebracht werden. Dieser Bitratenunterschied wird unter anderem dadurch ausgeglichen, daß im Signal mit höherer Bitrate zu festgelegten Zeitpunkten Stopfbits aufgenommen werden. Das Signal mit höherer Bitrate wird dabei nach einem Rahmen strukturiert. Ein solcher Rahmen kann beispielsweise das sogenannte synchrone Transportmodul STM-N (vgl. hierzu die CCITT-Empfehlungsentwürfe G 707, G 708, G 709) sein. Ein solcher Rahmen ist nach Zeilen gegliedert und jede Zeile weist wiederum eine bestimmte Anzahl von Bytes auf. In diesem Rahmen sind neben Stopfstellen für feste Stopfbits auch Stopfstellen für variable Stopfbits vorgesehen. Die Stopfstellen für feste Stopfbits werden in der Regel immer mit einem Stopfbit versehen, während die Stellen für die variablen Stopfbits entweder mit einem Informationsbit oder mit einem Stopfbit besetzt werden. Bei der Positiv-Stopftechnik wird entweder an einer Stopfstelle für ein variables Stopfbit ein Informationsbit oder ein Stopfbit eingefügt. Bei der Positiv-Negativ-Stopftechnik wird gegebenenfalls zusätzlich ein Informationsbit an einer Stelle für ein festes Stopfbit eingefügt. Darüber, ob ein Stopfbit oder ein Informationsbit an einer Stopfstelle eingefügt werden soll, entscheidet eine Stopfentscheidungsschaltung in der Schaltungsanordnung zur Bitratenanpassung. Da für die Stopfbits feste Stellen im Rahmen vorgesehen sind, können sie beim Demultiplexen wieder entfernt werden. Die Information darüber, ob ein variables Stopfbit in eine Stopfstelle eingefügt worden ist, kann noch in dem Signal mit der höheren Bitrate mitübertragen werden.

Auf der Empfängerseite des Übertragungssystem ist eine entsprechende Schaltungsanordnung einem plesiochronen Demultiplexer nachzuschalten, um die Stopfbits wieder zu entfernen und die Bitrate auf ihren ursprünglichen Wert zu bringen. Das Entfernen der Stopfbits erfolgt wiederum über einen Pufferspeicher, in den nur Nutzdaten eingeschrieben werden. Den Lesevorgang steuert eine Phasenregelschleife zur Erzeugung einer möglichst gleichmäßigen (jitterarmen) Taktfrequenz. Mit Jitter wird die Abweichung der Taktflanken von ihrer Sollage bezeichnet. Hochfrequente Spektralanteile im Jitter können empfangsseitig durch die Tiefpaßeigenschaft der Phasenregelschleife reduziert werden. Es können jedoch beliebig niederfrequente Spektralanteile des Jitters durch das Stopfen entstehen. Die Amplitude der niederfrequenten Spektralanteile läßt sich nur beim Stopfen, d.h. in der Schaltungsanordnung zur Bitratenanpassung (Sendeseite), reduzieren. Die oben erwähnte Schaltungsanordnung ist aus der deutschen Patentanmeldung DE-A-40 18 539, veröffentlicht am 12.12.91, bekannt. Diese weist einen Pufferspeicher auf, dem ein erstes Signal von einer Eingangsschaltung geliefert wird. Die Eingangsschaltung enthält einen Codeumsetzer und eine Phasenregelschleife mit angeschlossenen Frequenzteilern. Im Codeumsetzer wird das empfangene Signal in einen Binärcode umgesetzt und als erstes Signal dem Pufferspeicher geliefert. Mittels der Phasenregelschleife und der angeschlossenen Frequenzteiler werden ein Bittaktsignal und höherfrequente Taktsignale gewonnen. Der Einschreibvorgang in den Pufferspeicher wird durch einen Schreibzähler gesteuert, der Schreibadressen mit jedem Bittakt an den Pufferspeicher liefert. Der Auslesevorgang aus dem Pufferspeicher wird von einem Leseadressen liefernden Lesezähler gesteuert. Die Zählerinhalte des Schreib- und Lesezählers werden einem Subtrahierer zugeführt, der den Zählerinhalt des Lesezählers von dem Zählerinhalt des Schreibzählers subtrahiert. Zur Auflösungserhöhung des Subtraktionsergebnisses werden noch die höherfrequenten Taktsignale von den Phasenregelschleife mit angeschlossenen Teilern dem Subtrahierer geliefert. Das Ergebnis der Differenzbildung wird als Differenzsignal einer Stopfentscheidungsschaltung geliefert, welche ein Anhaltesignal für den Lesezähler und Stopfinformationssignale erzeugt. Die Stopfentscheidungsschaltung enthält eine Addiereranordnung, welche das Differenzsignal, das um einen Rahmen in einem Verzögerungsglied verzögerte Ausgangssignal der Addiereranordnung und Stopfsignale erhält. In einem Stopfsignal ist die Information darüber enthalten, ob negativ oder positiv gestopft wird. Ein dem Summierglied nachgeschalteter Schwellenwertdetektor entscheidet, ob ein negatives oder positives Stopfbit erzeugt werden muß. Anhand dieser Information des Schwellwertdetektors wird in einer Verknüpfungsschaltung entschieden, ob der Lesezähler angehalten wird oder weiter ein Lesetaktsignal erhält. Die Addiereranordnung und das Verzögerungsglied dienen zur Reduzierung der Amplitude der niederfrequenten Spektralanteile des Jitters.

Der Erfindung liegt die Aufgabe zugrunde, eine Schaltungsanordnung der eingangs genannten Art zu schaffen, welche die Amplitude der niederfrequenten Spektralanteile des Jitters durch andere Mittel reduziert.

Diese Aufgabe wird bei einer Schaltungsanordnung der eingangs genannten Art dadurch gelöst, daß die Stopfentscheidungsschaltung einen Akkumulator enthält, der über ein vorbestimmtes Zeitintervall zur Akkumulation des Differenzsignals, des um ein Zeitintervall verzögerten und mit einem ersten Faktor gewichteten Ausgangssignals des Akkumulators und eines die Anzahl der gestopften Bits zwischen zwei von der Stopfentscheidungsschaltung verursachten Anhaltezeitpunkten des Lesezählers angebenden und mit einem zweiten Faktor gewichteten Stopfsignals vorgesehen ist, und daß die Stopfentscheidungsschaltung zur Bildung eines Anhaltesignal für den Lesezähler aus dem Ausgangssignal des Akkumulators vorgesehen ist.

In der Schaltungsanordnung zur Bitratenanpassung dient der Subtrahierer dazu, die Abweichung der Zählerinhalte des Lesezählers und des Schreibzählers von einem Sollwert anzugeben. Diese Differenz wird in einem Akkumulator aufsummiert. Der sich ergebende Mittelwert erhöht die Auflösung der Abweichung der beiden Zählerinhalte vom Sollwert. Die Auflösung kann weiter erhöht werden, wenn, wie in der deutschen Patentanmeldung DE-A-4019 539 beschrieben, aus dem ersten Signal mit Hilfe einer Phasenregelschleife und angeschlossenen Frequenzteilen weitere Taktsignale zum Subtrahierer geleitet werden. überschreitet das Ausgangssignal des Akkumulators nach dem Ende des vorbestimmten Zeitintervalles einen vorgegebenen Wert, wird beispielsweise ein positives Stopfbit erzeugt. Wird in den Pufferspeicher das erste Signal seriell, d.h. Bit für Bit, eingelesen, so wird ein Anhaltesignal für den Lesezähler erzeugt. Werden mehrere Bits gleichzeitig in den Pufferspeicher eingelesen (parallele Signalverarbeitung), wird ein Anhaltesignal für den Lesezähler erst nach mehreren Stopfbits gebildet.

Der Lesezähler, der Subtrahierer und die Stopfentscheidungsschaltung bilden einen Regelkreis, wobei der Akkumulator den Regler darstellt. Zur Stabilisierung des Regelkreises erhält der Akkumulator das mit einem ersten Faktor gewichtete Ausgangssignal des Akkumulators, welches um ein Zeitintervall verzögert ist. Das mit einem ersten Faktor gewichtete Ausgangssignal wird in dem Akkumulator mit dem Differenzsignal aufgerechnet.

Im Akkumulator wird noch ein Stopfsignal akkumuliert, welches die Anzahl der gestopften Bits angibt, die zwischen zwei von der Stopfentscheidungsschaltung verursachten Anhaltezeitpunkten des Lesezählers auftreten. Ein Anhaltezeitpunkt ist der Zeitpunkt, wenn von der Stopfentscheidungsschaltung ein Anhaltesignal an den Lesezähler geliefert wird. Beispielsweise wird bei einer parallelen Signalverarbeitung erst nach dem Auftreten mehrerer Stopfbits ein Anhaltesignal von der Stopfentscheidungsschaltung erzeugt. Die Kombination des mit einem zweiten Faktor gewichteten Stopfsignals mit dem Differenzsignal und dem gewichteten Ausgangssignal des Akkumulators bewirkt eine Berücksichtigung des Stopfvorganges bei der Akkumulation.

Des weiteren erfolgt durch den Akkumulator eine Reduzierung der Amplitude der niederfrequenten Spektralanteile des Jitters.

Wird ein höherfrequentes Signal der Schaltungsanordnung zugeführt, muß bei einer Realisierung der Schaltungsanordnung in CMOS-Technik eine parallele Signalverarbeitung vorgenommen werden. Hierbei ist vorgesehen, daß der Pufferspeicher zur parallelen Einschreibung und zur parallelen Auslesung von Datenworten mit n Bits des ersten Signals eingerichtet ist, daß eine Auswahlmatrix zur Einfügung von Stopfbits in den vom Pufferspeicher gelieferten Datenstrom des zweiten Signals vorgesehen ist und daß die Stopfentscheidungsschaltung noch eine Spurzahlschaltung enthält, welche
- zur Ermittlung des Stopfsignals für die Anzahl der zu stopfenden Bits in der Auswahlmatrix aus dem Ausgangssignal des Akkumulators
- zur modulo-n-Zählung der gestopften Bits und
- zur Erzeugung eines Anhaltesignals für den Lesezähler für ein Akkumulationszeitintervall nach n gestopften Bits vorgesehen ist.
Hierbei kann eine positive Stopftechnik angewendet werden.

In der Spurzahlschaltung wird die Anzahl der gestopften Bits gezählt. Sind n gestopfte Bits erzeugt worden, so wird der Lesezähler durch ein Anhaltesignal für ein Akkumulationszeitintervall angehalten. Das Akkumulationszeitintervall ist die Zeit, welche für eine Akkumulation der Signale zur Verfügung gestellt wird. Durch das Anhalten des Lesezählers wird in dem Subtrahierer zweimal die Differenz mit dem gleichen Zählerinhalt des Lesezählers gebildet. Am Eingang des Akkumulators wird ohne Rückführung des mit einem zweiten Faktor gewichteten Stopfsignals erst nach n Stopfbits ein Stopfvorgang berücksichtigt. Durch die Kombination des mit einem ersten Faktor gewichteten Stopfsignals und des Differenzsignals wird jedoch jedes Stopfbit bei der Akkumulation berücksichtigt. Hierdurch wird das Verhalten des aus Lesezähler, Subtrahierer und Stopfentscheidungsschaltung gebildeten Regelkreises verbessert.

Der Akkumulator enthält ein Register und eine Addiereranordnung, welches zur Kombination des Ausgangssignals des der Addiereranordnung nachgeschalteten Registers, des Differenzsignals, des gewichteten Stopfsignals und des verzögerten und gewichteten Ausgangssignals des Registers vorgegeben ist. Die Wichtung des Ausgangssignals des Akkumulators mit einem ersten Faktor kann während jedes Akkumulationszeitintervalles vorgenommen werden. Eine einfachere Möglichkeit ergibt sich, wenn vorgesehen ist, daß eine Dekoderschaltung zur Wichtung des mit einem ersten Faktor des um ein Zeitintervall verzögerten Ausgangssignals des Akkumulators mittels einer Dekoderschaltung und zur Zuführung des mit einem dritten Faktor gewichteten und verzögerten Vorzeichenbit des Ausgangssignals nur während eines Akkumulationszeitintervalles der Addiereranordnung vorgesehen ist. Bei dieser Ausführungsform muß nur eine Multiplikation des dritten Faktors mit einem Bit durchgeführt werden. In praktischen Versuchen hat sich gezeigt, daß der dritte Faktor 128 beträgt.

Wenn ein variables Stopfbit in der Auswahlmatrix eingefügt wird, wurde vorher eine dazu entsprechende Stopfinformation erzeugt. Dazu wird ein Stopfinformationssignal aus dem Vorzeichenbit des Ausgangssignals des Akkumulators gebildet. Ein Stopfinformationssignal kann auch in Abhängigkeit eines Vergleiches zwischen dem Ausgangssignal des Akkumulators und dem mittels eines Zufallsgenerators gebildeten Wertes erzeugt werden. Der Zufallsgenerator erzeugt innerhalb eines vorbestimmten Bereiches vorgegebene Werte.

In einer Ausführungsform für die Spurzahlschaltung ist vorgesehen, daß diese einen Spurzahlzähler, welcher nach jedem vorbestimmten Zeitintervall zur Erhöhung seines Zählerinhaltes um eine Einheit und um die Stopfinformtion und welcher zur Lieferung seines Zählerinhaltes als Stopfsignal zur Auswahlmatrix vorgesehen ist, und eine Logikschaltung enthält, die zur Zuführung eines Anhaltesignals zum Lesezähler nach Zählung von jeweils n gestopften Bits im Spurzahlzähler vorgesehen ist.

Die Wichtung des Stopfsignales mit einem zweiten Faktor wird dadurch realisiert, daß die Addiereranordnung zur Zuführung des Zählerinhaltes des Spurzahlzählers an seine niederwertigsten Eingänge vorgesehen ist, wobei das höchstwertigste Bit des Zählerinhaltes des Spurzahlzählers eine um eine Stelle niedrigere Wertigkeit als das niederwertigste Bit des Differenzsignales hat. Zwischen Akkumulator und Spurzahlschaltung ist noch ein Register angeordnet. Das Register ist zur Speicherung des Ausgangssignal des Akkumulators am Ende des vorbestimmten Zeitintervalles vorgesehen.

Die Schaltungsanordnung zur Bitratenanpassung eignet sich insbesondere dazu, ein zweites Signal zu erzeugen, welches nach einem STM-N-Rahmen strukturiert ist, bei dem das vorbestimmte Zeitintervall der Dauer einer Zeile des Rahmens entspricht und ein Akkumulationszeitintervall der Dauer eines Bytes einer Zeile entspricht. Ein STM-1-Rahmen besitzt neun Zeilen und jede Zeile setzt sich aus 270 Bytes zusammen. In diesem Fall weist ein paralleles Datenwort acht Bits auf.

Schaltungsteile der Schaltungsanordnung zur Bitratenanpassung können auch durch Mikroprozessoren oder andere rechnergesteuerte Bausteine übernommen werden.

Ein Ausführungsbeispiel der Erfindung wird nachstehend anhand der Figuren näher erläutert.

Es zeigen:
Fig. 1 eine schematisch dargestellte Schaltungsanordnung zur Bitratenanpassung und
Fig. 2 eine näher dargestellte Stopfentscheidungsschaltung nach Fig. 1.

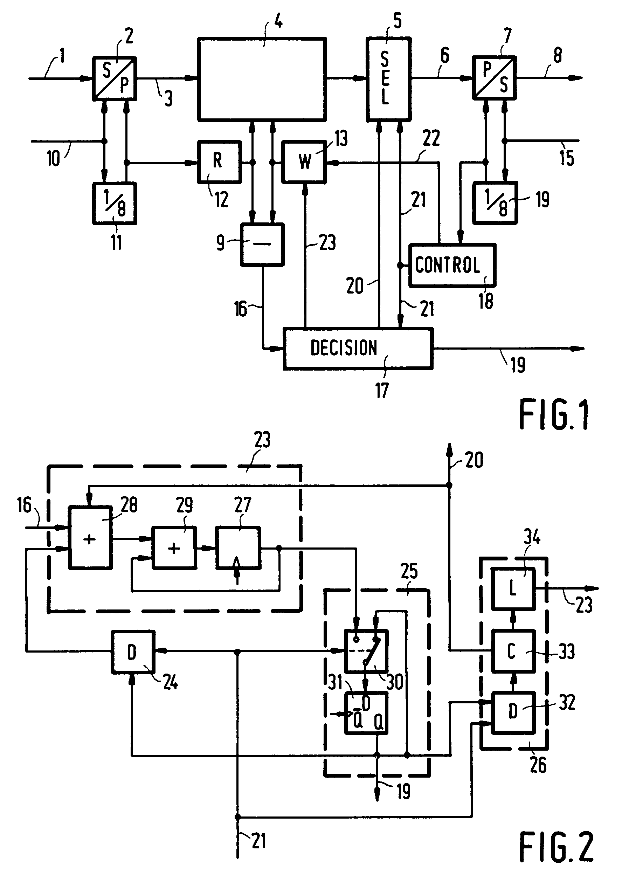

In Fig. 1 wird über eine Leitung 1 einem Serien-Parallel-Umsetzer 2 ein erstes binäres Signal mit einer nominellen Bitrate von 139,264 Mbit/s zugeführt. In dem Serien-Parallel-Umsetzer 2 wird ein serielles Datenwort mit beispielsweise acht Bit in ein paralleles Datenwort mit acht Bit oder einem Byte über Leitungen 3 einem Pufferspeicher 4 zugeführt. In dem Pufferspeicher 4 wird ein paralleles Datenwort zwischengespeichert und anschließend einer Auswahlmatrix 5 zugeführt. Die Auswahlmatrix 5 fügt in den Strom der Datenworte Stopfbits, Stopfinformationsbits sowie weitere Hilfsinformationen ein. Die Einfügung der Bits bzw. Hilfsinformationen wird an dazu vorgesehenen Stellen vorgenommen. Die Auswahlmatrix 5, welche näher in der deutschen Patentanmeldung P 39 20 391 beschrieben ist, wendet die Positiv-Stopftechnik an, d.h. es werden Stopfbits in das ankommende Signal eingefügt. Das Ausgangssignal der Auswahlmatrix 5 wird über Leitungen 6 zu einem Parallel-Serien-Umsetzer 7 geführt. Das Ausgangssignal des Parallel-Serien-Umsetzers 7 ist ein nach Rahmen strukturiertes zweites binäres Signal mit einer Bitrate von 155,52 Mbit/s. Der Rahmen ist der sogenannte synchrone Transportmodul STM-1, dessen Struktur zur Aufnahme von 140 Mbit/s-Signalen aus der Fig. 5.3 der CCITT-Empfehlung G709 entnehmbar ist. Ein STM-1-Rahmen besteht aus neun Zeilen und jede Zeile aus 270 Bytes. Das im Parallel-Serien-Umsetzer 7 umgesetzte zweite binäre Signal wird auf eine Ausgangsleitung 8 gegeben.

In einer in der Fig. 1 nicht näher dargestellten Schaltung wird aus dem ersten binären Signal ein Bittaktsignal gewonnen, das über eine Leitung 10 einem Takteingang des Serien-Parallel-Umsetzers 2 und einem ersten Frequenzteiler 11 zugeführt wird, der ein um den Faktor 8 untersetztes Schreibtaktsignal erzeugt, dessen Frequenz 17,408 MHz beträgt. Dieses Schreibtaktsignal wird einem zweiten Takteingang des Serien-Parallel-Umsetzers 2 geliefert. Das Schreibtaktsignal erhält noch ein Schreibzähler 12, der mit jedem Taktsignal seinen Zählerinhalt um eine Einheit erhöht. Die von dem Schreibzähler 12 erzeugten Schreibadressen werden dem Pufferspeicher 4 geliefert, der jeweils ein von dem Serien-Parallel-Umsetzer 2 über die Leitungen 3 ankommendes Datenwort unter einer solchen vom Schreibzähler 12 erzeugten Schreibadresse ablegt.

In einer ebenfalls hier nicht näher dargestellten Schaltung wird das zweite binäre Signal mit einem lokalen Bittaktsignal verknüpft, das über eine Leitung 15 einem Takteingang des Parallel-Serien-Umsetzers 7 und einem zweiten Frequenzteiler 14 zugeführt wird. Der zweite Frequenzteiler 14 teilt das auf der Leitung 15 gelieferte Bittaktsignal ebenfalls durch den Faktor 8. Durch die Frequenzteilung im zweiten Frequenzteiler 14 entsteht ein Lesetaktsignal mit einer Frequenz von 19,44 MHz, welches einem weiteren Takteingang des Parallel-Serien-Umsetzers 7 und einer Steuerschaltung 18 geliefert wird. Die Steuerschaltung 18 besteht aus wenigstens einem Zähler und einer Dekodierungsschaltung, die den Stand des Zählers dekodiert und bei vorbestimmten Zählerständen Impulse abgibt, die zur Markierung bestimmter Bytes innerhalb des STM-1-Rah- mens bzw. innerhalb einer Zeile dienen. Eine solche Steuerschaltung 18 ist beispielsweise in der deutschen Patentanmeldung P 39 42 883 oder in der deutschen Patentanmeldung P 39 42 885 beschrieben. Die Steuerschaltung 18 liefert auch ein Zeilentaktsignal, dessen Impulsdauer der Impulsdauer eines Lesetaktsignales entspricht und dessen Frequenz um den Faktor 270 gegenüber der Frequenz des Lesetaktsignals erniedrigt ist. Signale der Steuerschaltung 18 werden über Leitungen 21 und 22 dem Lesezähler 13, der Auswahlmatrix 5 und einer Stopfentscheidungsschaltung 17 zugeführt.

Der Lesezähler 13 erhält von der Steuerschaltung 18 über eine der Leitungen 22 das Lesetaktsignal des zweiten Frequenzteilers 14. Mit jedem neuen Takt des Lesetaktsignals wird der Zählerinhalt des Lesezählers 13 um eine Einheit erhöht. Eine solche Veränderung des Zählerinhalts des Lesezählers 13 wird nur dann vorgenommen werden, wenn die Stopfentscheidungsschaltung 17 und/oder die Steuerschaltung 18 keine Anhaltesignale über eine Leitung 23 bzw. Leitungen 22 liefern. Ein Anhaltesignal von der Steuerschaltung 18 wird beispielsweise dann erzeugt, wenn mehrere feste Stopfbits in Bytelänge eingefügt werden. Der Lesezähler 13 liefert an den Pufferspeicher 4 Leseadressen. Aus dem Pufferspeicher 4 werden mit jedem Lesetakt die unter der vom Lesezähler 13 gelieferten Leseadresse abgelegten Datenworte ausgelesen. Es sei hier erwähnt, daß dem Pufferspeicher 4 noch ein Schreibtaktsignal und ein Lesetaktsignal zum Einschreiben bzw. Auslesen zugeführt wird, was aus Gründen der Übersichtlichkeit in der Fig. 1 nicht dargestellt ist. Wird der Lesezähler 13 durch ein Anhaltesignal auf der Leitung 23 nicht weitergetaktet, so wird ein paralleles Datenwort aus dem Pufferspeicher 4 zweimal ausgelesen.

Ein Vergleich der Schreibadressen mit den Leseadressen findet in einem Subtrahierer 9 statt, der den Zählerinhalt des Schreibzählers 12 von dem Zählerinhalt des Lesezählers 13 subtrahiert. Das durch die Subtraktion gebildete Differenzsignal wird über Leitungen 16 der Stopfentscheidungsschaltung 17 zugeführt. Da der Schreibzähler 12 und der Lesezähler 13 mit unterschiedlichen Taktfrequenzen arbeiten, umfaßt der Subtrahierer 9 eine Synchronisationsschaltung, die den Zählerinhalt des Schreibzählers 12 auf das Lesetaktsignal bezieht. Diese Synchronisationsschaltung enthält einen Umcodierer, der den Zählerinhalt des Schreibzählers 12 zunächst in einen einschrittigen Zwischencode (Gray-Code) umsetzt und nach Abtastung mit dem Lesetakt wieder in einen zur Subtraktion geeigneten Code (Dualcode) zurücksetzt. Die Codeumsetzung führt bei halbem Füllstand des Pufferspeichers 4, d.h. bei maximalem Abstand der Zähleradressen des Schreibzählers 12 und des Lesezählers 13 zum Wert Null als Differenz. Dieser halbe Füllstand des Pufferspeichers 4 bildet einen Sollwert. Eine genauere Beschreibung des Subtrahierers 9 ist in der deutschen Patentanmeldung P 39 42 883 dargelegt.

In der Fig. 1 ist durch den Subtrahierer 9, die Stopfentscheidungsschaltung 17 und den Lesezähler 13 ein Regelkreis gebildet, mit dem die Einhaltung des Sollwertes realisiert wird. Da das Lesetaktsignal eine höhere Frequenz als das Schreibtaktsignal aufweist, wird der Lesezähler 13 für vorgegebene Zeiten angehalten, damit eine Annäherung an den Sollwert erreicht werden kann. Zur Feinkorrektur wird der Lesezähler während eines zusätzlichen Taktes angehalten, wenn von der Stopfentscheidungsschaltung 17 ein Anhaltesignal für den Lesezähler 13 erzeugt worden ist. Die Stopfentscheidungsschaltung 17 liefert über Leitungen 20 der Auswahlmatrix 5 noch das Stopfsignal, das jeweils den Zählerinhalt des Spurzahlzählers 33 beinhaltet. Abhängig von diesem Signal wird ein festes und/oder ein variables Stopfbit in den vom Pufferspeicher 4 gelieferten Datenstrom eingefügt. Die Stopfentscheidungsschaltung 17 entscheidet dabei nur über die Einfügung eines variablen Stopfbits. Die Steuerschaltung 18 liefert der Auswahlmatrix 5 über eine der Leitungen 21 die Information, wann ein festes Stopfbit eingefügt wird. Des weiteren liefert die Stopfentscheidungsschaltung 17 über eine Leitung 19 noch ein Stopfinformationssignal, welches mit dem zweiten binären Signal verknüpft werden kann oder direkt einer Entstopfungsschaltung zugeführt werden kann. Aus dem Stopfinformationssignal ist zu entnehmen, wann ein variables Stopfbit eingefügt werden soll.

In Fig. 2 ist ein Ausführungsbeispiel der Stopfentscheidungsschaltung 17 dargestellt. Diese enthält einen Akkumulator 23, eine Dekoderschaltung 24, ein Register 25 und eine Spurzahlschaltung 26. Bestandteil des Akkumulators 23 ist eine Addiereranordnung und ein Register 27. Die Addiereranordnung enthält einen ersten Addierer 28, der das Differenzsignal vom Subtrahierer 9 über Leitungen 16, das Ausgangssignal der Dekoderschaltung 24 und das Stopfsignal der Spurzahlschaltung 26 erhält, und einen zweiten Addierer 29. Das Differenzsignal wird höherwertigen ersten Eingängen und das Stopfsignal drei niederwertigen zweiten Eingängen des ersten Addierers 28 zugeführt. Der niedrigste höherwertige Eingang der ersten Eingänge hat also eine höhere Wertigkeit als der höchste niederwertige Eingang der zweiten Eingänge. Der Unterschied der Wertigkeitsstellen zwischen dem niedrigsten höherwertigen Eingang der ersten Eingänge und dem höchsten niederwertigen Eingang der zweiten Eingänge beträgt eins. Das Ausgangssignal der Dekoderschaltung 24 wird höherwertigen dritten Eingängen des ersten Addierers 28 zugeführt. Das Ausgangssignal des ersten Addierers 28 wird ersten Eingängen und das Ausgangssignal des Registers 27 zweiten Eingängen des zweiten Addierers 29 zugeführt, dessen Ausgänge mit Eingängen des Registers 27 verbunden sind. Die ersten und zweiten Eingänge des Addierers 29 haben jeweils die gleiche Wertigkeit. Das Register 27 erhält noch das Lesetaktsignal zur Speicherung des Ausgangssignals des zweiten Addierers 29 mit jedem Lesetakt (Akkumulationszeitintervall).

Der höchstwertigste Ausgang des Registers 27, der das Vorzeichenbit liefert, ist mit einem ersten Eingang eines im Register 25 enthaltenen Multiplexers 30 verbunden. Der Ausgang des Multiplexers 30 ist mit einem D-Eingang eines D-Kippgliedes 31 verbunden, dessen nichtinvertierender Ausgang mit dem zweiten Eingang des Multiplexers 30 verbunden ist. Der nichtinvertierende Ausgang des D-Kippgliedes 31 ist noch mit der Leitung 19 verbunden, die das Stopfinformationssignal liefert. Des weiteren ist der nichtinvertierende Ausgang noch mit der Spurzahlschaltung 26 und mit der Dekoderschaltung 24 verbunden. Das Stopfinformationssignal enthält entweder eine binäre "1" oder "0". Gesteuert wird der Multiplexer 30 von dem Zeilentaktsignal, das auf einer Leitung 21 dem Steuereingang des Multiplexers 30 zugeführt wird. Des weiteren erhält die Dekoderschaltung 24 ebenfalls das Zeilentaktsignal an einem Steuereingang. Die Dekoderschaltung liefert für einen Lesetakt während einer Zeile das mit einem Faktor 128 multiplizierte Stopfinformationssignal an die dritten Eingänge des Addierers 28.

Die Spurzahlschaltung 26 enthält einen Zählerdekodierer 32, einen Spurzahlzähler 33 und eine Logikschaltung 34. Der Zählerdekodierer 32 erhält das Zeilentaktsignal und das Stopfinformationssignal, und er steuert den Spurzahlzähler 33 so, daß bei einer binären "1" im Stopfinformationssignal der Spurzahlzähler um zwei Einheiten und im anderen Falle um eine Einheit erhöht wird. Der Spurzahlzähler 32 ist ein modulo-8-Zähler, dessen Überlaufausgang mit der Logikschaltung 34 verbunden ist. Wird an dem Überlaufausgang eine binäre "1" erzeugt, so erzeugt die Logikschaltung 34 ein Anhaltesignal, das auf einer Leitung 23 dem Lesezähler 13 zugeführt wird. Der Zählerinhalt des Spurzahlzählers 33 wird über drei Leitungen 20 der Auswahlmatrix 5 und den zweiten Eingängen des ersten Addierers 28 geliefert.

Im Akkumulator 23 wird über ein vorbestimmtes Zeitintervall, d.h. während der Dauer einer Zeile, der Mittelwert der Differenzergebnisse des Subtrahierers 9 gebildet. Nach der Dauer einer Zeile wird im Register 25 das Vorzeichenbit des Ausgangssignales des Akkumulators 23 gespeichert. Das Vorzeichenbit stellt einen Schwellwert dar. Hiernach wird entschieden, ob ein variables Stopfbit eingefügt wird. Da nach dem Auftreten von 8 Stopfbits erst in der Logikschaltung 34 ein Anhaltesignal erzeugt wird, wird als Korrektursignal mit jedem Lesetakt das Stopfsignal an die niederwertigsten zweiten Eingänge des ersten Addierers 28 geführt. Ohne Berücksichtigung der Stopfbits wäre das Subtraktionsergebnis in der Regel negativ. Daher werden die schon gestopften Bits im ersten Addierer 28 dagegen aufgerechnet. Damit werden die schon gestopften Bits bei der Mittelwertbildung berücksichtigt. Mittels der Rückkopplung des um einen Takt verzögerten und in der Dekoderschaltung 24 gewichteten höchstwertigsten Bits des Registers 27 wird eine Stabilisierung des aus Stopfentscheidungsschaltung 17, Lesezähler 13 und Subtrahierer 9 gebildeten Regelkreises erreicht.

## Patentansprüche

1. Schaltungsanordnung Zur Bitratenanpassung zweier digitaler Signale
- mit einem Pufferspeicher (4) zum Einschreiben eines ersten Signals und zum Auslesen eines zweiten Signals,
- mit einem Subtrahierer (9) zur Erzeugung eines Differenzsignals durch Bildung der Differenz der Zählerinhalte zwischen einem zur Steuerung des Lesevorgangs dienenden Lesezähler (13) und einem zur Steuerung des Schreibvorgangs dienenden Schreibzähler (12) und
- mit einer Stopfentscheidungsschaltung (17) zur Erzeugung eines Anhaltesignals für den Lesezähler,
dadurch gekennzeichnet,
daß die Stopfentscheidungsschaltung (17) einen Akkumulator (23) enthält, der über ein vorbestimmtes Zeitintervall zur Akkumulation des Differenzsignals, des um ein Zeitintervall verzögerten und mit einem ersten Faktor gewichteten Ausgangssignals des Akkumulators und eines die Anzahl der gestopften Bits zwischen zwei von der Stopfentscheidungsschaltung verursachten Anhaltezeitpunkten des Lesezählers angebenden und mit einem zweiten Faktor gewichteten Stopfsignals vorgesehen ist,
und daß die Stopfentscheidungsschaltung zur Bildung eines Anhaltesignals für den Lesezähler (13) aus dem Ausgangssignal des Akkumulators vorgesehen ist.

2. Schaltungsanordnung nach Anspruch 1,
dadurch gekennzeichnet,
daß in den Pufferspeicher (4) zur parallelen Einschreibung und zur parallelen Auslesung von Datenwortes mit n Bits des ersten Signals eingerichtet ist,
daß eine Auswahlmatrix (5) zur Einfügung von Stopfbits in den vom Pufferspeicher gelieferten Datenstrom des zweiten Signals vorgesehen ist und
daß die Stopfentscheidungsschaltung (17) noch eine Spurzahlschaltung (26) enthält, welche
- zur Ermittlung des Stopfsignals für die Anzahl der zu stopfenden Bits in der Auswahlmatrix aus dem Ausgangssignal des Akkumulators (23)
- zur modulo-n-Zählung der gestopften Bits und
- zur Erzeugung eines Anhaltesignals für den Lesezähler (13) für ein Akkumulationszeitintervall nach n gestopften Bits vorgesehen ist.

3. Schaltungsanordnung nach Anspruch 2,
dadurch gekennzeichnet,
daß der Akkumulator (23) ein Register (27) und eine Addiereranordnung (28, 29) enthält, welche zur Kombination des Ausgangssignals des der Addiereranordnung nachgeschalteten Registers, des Differenzsignals, des gewichteten Stopfsignals und des verzögerten und gewichteten Ausgangssignals des Registers vorgesehen ist.

4. Schaltungsanordnung nach Anspruch 3,
dadurch gekennzeichnet,
daß eine Dekoderschaltung (24) zur Wichtung des mit einem ersten Faktor des um ein Zeitintervall verzögerten Ausgangssignals des Akkumulators (23) mittels einer Dekoderschaltung (24) und zur Zuführung des mit einem dritten Faktor gewichteten und verzögerten Vorzeichenbit des Ausgangssignals nur während eines Akkumulationszeitintervalles der Addiereranordnung (28, 29) vorgesehen ist.

5. Schaltungsanordnung nach einem der Ansprüche 2 bis 4,
dadurch gekennzeichnet,
daß das Vorzeichenbit des Ausgangssignals des Akkumulators (23) zur Bildung des Stopfinformtionssignal vorgesehen ist.

6. Schaltungsanordnung nach Anspruch 5,
dadurch gekennzeichnet,
daß die Spurzahlschaltung (26) einen Spurzahlzähler (33), welcher nach jedem vorbestimmten Zeitintervall zur Erhöhung seines Zählerinhaltes um eine Einheit und um die Stopfinformation und welcher zur Lieferung seines Zählerinhaltes als Stopfsignal zur Auswahlmatrix (5) vorgesehen ist, und eine Logikschaltung (34) enthält, die zur Zuführung eines Anhaltesignals zum Lesezähler (13) nach Zählung von jeweils n gestopften Bits im Spurzahlzähler vorgesehen ist.

7. Schaltungsanordnung nach Anspruch 3 und 6,
dadurch gekennzeichnet,
daß die Addiereranordnung (28, 29) zur Zuführung des Zählerinhaltes des Spurzahlzählers (33) an seine niederwertigsten Eingänge vorgesehen ist, wobei das höchstwertigste Bit des Zählerinhaltes des Spurzahlzählers eine um eine Stelle niedrigere Wertigkeit als das niederwertigste Bit des Differenzsignales hat.

8. Schaltungsanordnung nach einem der Anspüche 2 bis 7,
dadurch gekennzeichnet,
daß zwischen Akkumulator (23) und Spurzahlschaltung (26) ein Register (25) angeordnet ist, welches zur Speicherung des Ausgangssignals des Akkumulators am Ende des vorbestimmten Zeitintervalles vorgesehen ist.

9. Schaltungsanordnung nach einem der Ansprüche 2 bis 8,
dadurch gekennzeichnet,
daß die Strukturierung des zweiten Signals nach einem STM-N-Rahmen vorgesehen ist, bei dem das vorbestimmte Zeitintervall der Dauer einer Zeile des Rahmens entspricht und ein Akkumulationszeitintervall der Dauer eines Bytes einer Zeile entspricht.

## Claims

1. Circuit for bit-rate adaptation of two digital signals, comprising:
- a buffer memory (4) for writing a first signal and reading out a second signal,
- a subtractor (9) for forming a difference signal by determining the difference between the counts of a read counter (13) used for controlling the read operation and a write counter (12) used for controlling the write operation, and
- a justification decision circuit (17) for generating a stop signal for the read counter,
characterized in that the justification decision circuit (17) comprises an accumulator (23) which is provided to accumulate over a predetermined time interval the difference signal, the accumulator output signal delayed by a time interval and weighted with a first factor, and a justification signal representing the number of stuffed bits between two of the stop instants of the read counter caused by the justification decision circuit, and in that the justification decision circuit is provided to form a stop signal for the read counter (13) on the basis of the accumulator output signal.

2. Circuit as claimed in Claim 1, characterized in that the buffer memory (4) is provided to write and read in parallel n-bit data words of the first signal, in that a selection matrix (5) is provided to insert stuff bits into the data stream of the second signal supplied by the buffer memory, and in that the justification decision circuit (17) also includes a track counter circuit which is provided
- to determine the justification signal for the number of bits to be stuffed in the selection matrix on the basis of the output signal of the accumulator (23),
- to count modulo n the stuffed bits and
- to generate a stop signal for the read counter (13) for the duration of an accumulation time interval after n stuffed bits.

3. Circuit as claimed in Claim 2, characterized in that the accumulator (23) comprises a register (27) and an adder circuit (28, 29), which circuit is provided to combine the output signal of the register following the adder circuit, the difference signal, the weighted justification signal and the delayed and weighted output signal of the register.

4. Circuit as claimed in Claim 3, characterized in that a decoder circuit (24) is provided to weight with a first factor the output signal of the accumulator, which output signal is delayed by a time interval, and to apply the sign bit of the output signal delayed and weighted with a third factor only for the duration of an accumulation time interval of the adder circuit (28, 29).

5. Circuit as claimed in one of the Claims 2 to 4, characterized in that the sign bit of the output signal of the accumulator (23) is provided to form the justification information signal.

6. Circuit as claimed in Claim 5, characterized in that the track counter circuit (26) comprises a track counter (33) which increments its count by unity and by the justification information after each predetermined time interval and which is provided to supply its count as a justification signal to the selection matrix (5), and includes a logic circuit (34) which is provided to apply a stop signal to the read counter (13) when the track counter has counted n stuffed bits.

7. Circuit as claimed in Claims 3 and 6, characterized in that the outputs of the track counter (33) are coupled to the least significant inputs of the adder circuit (28, 29) and the difference signal is applied to the most significant inputs of the adder circuit (28, 29).

8. Circuit as claimed in one of the Claims 2 to 7, characterized in that a register (25) which is provided to store the output signal of the accumulator at the end of the predetermined time interval is inserted between the accumulator (23) and the track counter circuit (26).

9. Circuit as claimed in one of the Claims, 2 to 8, characterized in that the second signal is structured in accordance with a STM-N frame in which the predetermined time interval corresponds to the duration of a row of the frame and an accumulation time interval corresponds to the duration of one byte of a row.

## Revendications

1. Montage de circuit d'adaptation du débit binaire de deux signaux numériques, comportant :
- une mémoire tampon (4) pour inscrire un premier signal et lire un deuxième signal;
- un soustracteur (9) pour produire un signal de différence par formation de la différence des contenus d'un compteur de lecture (13) servant à la commande de l'opération de lecture et d'un compteur d'écriture (12) servant à la commande de l'opération d'écriture, et
- un circuit de décision de bourrage (17) pour produire un signal de blocage pour le compteur de lecture,
caractérisé en ce que le circuit de décision de bourrage (17) contient un accumulateur (23), qui est destiné, sur un intervalle de temps prédéterminé, à accumuler le signal de différence, le signal de sortie de l'accumulateur retardé d'un intervalle de temps et pondéré par un premier facteur et un signal de bourrage indiquant le nombre de bits de bourrage entre deux instants de blocage du compteur de lecture déclenchés par le circuit de décision de bourrage et pondéré par un deuxième facteur, et que le circuit de décision de bourrage est prévu pour former un signal de blocage pour le compteur de lecture (13) à partir du signal de sortie de l'accumulateur.

2. Montage de circuit selon la revendication 1, caractérisé en ce que la mémoire tampon (4) est aménagée pour l'inscription parallèle et pour l'extraction parallèle de mots de données de n bits du premier signal, en ce qu'une matrice de sélection (5) est présente pour insérer des bits de bourrage dans le flux de données du deuxième signal délivré par la mémoire tampon et que le circuit de décision de bourrage (17) contient encore un circuit de suivi (26), qui est prévu :
- pour déterminer le signal de bourrage pour le nombre des bits à insérer dans la matrice de sélection à partir du signal de sortie de l'accumulateur (23);
- pour effectuer un comptage modulo-n des bits insérés, et
- pour produire un signal de blocage pour le compteur de lecture (13) pendant un intervalle de temps d'accumulation après n bits insérés.

3. Montage de circuit selon la revendication 2, caractérisé en ce que l'accumulateur (23) contient un registre (27) et un circuit additionneur (28, 29), qui est destiné à combiner le signal de sortie du registre monté en aval de l'additionneur, du signal de différence, du signal de bourrage pondéré et du signal de sortie retardé et pondéré du registre.

4. Montage de circuit selon la revendication 3, caractérisé en ce qu'un circuit de décodage (24) permet de pondérer le signal de sortie de l'accumulateur (23) retardé d'un intervalle de temps par un premier facteur et d'acheminer le bit de signe du signal de sortie retardé et pondéré par un troisième facteur, uniquement au cours d'un intervalle de temps d'accumulation du circuit additionneur (28, 29).

5. Montage de circuit selon l'une quelconque des revendications 2 à 4, caractérisé en ce que le bit de signe du signal de sortie de l'accumulateur (23) est prévu pour la formation du signal d'information de bourrage.

6. Montage de circuit selon la revendication 5, caractérisé en ce que le circuit de suivi (26) contient un compteur de suivi (33), qui est destiné, après chaque intervalle de temps prédéterminé, à augmenter son contenu d'une unité et des informations de bourrage et à délivrer son contenu de comptage comme signal de bourrage à la matrice de sélection (5), et un circuit logique (34), qui est destiné à acheminer un signal de blocage au compteur de lecture (13) après comptage respectivement de n bits insérés dans le compteur de suivi.

7. Montage de circuit selon les revendications 3 et 6, caractérisé en ce que le circuit additionneur (28, 29) est destiné à acheminer le contenu du compteur de suivi (33) à ses entrées les moins significatives, le bit le plus significatif du contenu du compteur de suivi ayant un poids inférieur d'une position à celui du bit le moins significatif du signal de différence.

8. Montage de circuit selon l'une quelconque des revendications 2 à 7, caractérisé en ce que, entre l'accumulateur (23) et le circuit de suivi (26) est agencé un registre (25), qui est prévu pour mémoriser le signal de sortie de l'accumulateur à la fin de l'intervalle de temps prédéterminé.

9. Montage de circuit selon l'une quelconque des revendications 2 à 8, caractérisé en ce que la structuration du deuxième signal est prévue selon une trame STM-N dans laquelle l'intervalle de temps prédéterminé correspond à la durée d'une ligne de la trame et un intervalle de temps d'accumulation correspond à la durée d'un octet d'une ligne.
